# EUROPEAN PATENT SPECIFICATION

(11) **EP 4 370 845 B1**
(45) Date of publication and mention of the grant of the patent: **12.02.2025**
(21) Application number: 22741293.9
(22) Date of filing: 11.07.2022
(51) Int. Cl.: F25B 33/00

(54) **RECTIFIER FOR A GENERATOR OF REFRIGERANT VAPOUR FOR ABSORPTION THERMAL MACHINES, AND GENERATOR COMPRISING SUCH RECTIFIER**
GLEICHRICHTER FÜR EINEN KÄLTEMITTELDAMPFERZEUGER FÜR ABSORPTIONSWÄRMEMASCHINEN UND GENERATOR UMFASSEND EINEN SOLCHEN GLEICHRICHTER
REDRESSEUR POUR GÉNÉRATEUR DE VAPEUR DE FLUIDE FRIGORIGÈNE POUR MACHINES THERMIQUES À ABSORPTION ET GÉNÉRATEUR COMPORTANT UN TEL REDRESSEUR

(30) Priority: 12.07.2021 IT 202100018323
(43) Date of publication of application: 22.05.2024
(73) Proprietor: Politecnico di Milano, 20133 Milano (IT)
(72) Inventor: PISTOCCHINI, Lorenzo, 20156 Milano (IT); TOPPI, Tommaso, 22063 Cantu (IT); APRILE, Marcello, 20865 Usmate Velate (IT); MOTTA, Mario Gualtiero Francesco, 20131 Milano (IT)
(74) Representative: Lavoix
(86) International application number: PCT/EP2022/069295
(87) International publication number: WO 2023/285364

(56) References cited:
- WO-A2-99/64147
- CN-Y- 2 485 604
- US-A- 4 573 330

## Description

The present invention relates to a rectifier for a generator of refrigerant vapour for thermal machines based on an absorption cycle, and to a generator comprising such a rectifier.

As is known, absorption thermal machines, typically chillers or heat pumps, are thermal machines that exploit the capability of a substance, whether liquid or solid, to 'absorb' a second chemical species in the gaseous state; for example an unsaturated solution of water and ammonia can absorb ammonia vapour.

This property allows realizing a refrigeration cycle with a thermochemical compressor: the refrigerant vapour at low-pressure is not compressed with an electrically powered mechanical compressor, but absorbed by the absorbent solution, which is then pumped at high pressure with reduced power consumption and sent to a generator or desorber. In the generator, the solution is heated to boiling, resulting in the production of high-pressure refrigerant vapour necessary for realizing the refrigeration cycle.

The refrigerant-rich, high-pressure vapour is sent to a condenser and then, passing through an evaporator, returns to an absorber.

The hot, depleted solution exiting the generator flows into a solution heat exchanger (SHX), which has the purpose of recovering the heat of the depleted solution by preheating the refrigerant-rich solution pumped towards the generator, which then passes through a thermal expansion valve and also returns to the absorber, where it absorbs the refrigerant vapour.

In particular, the refrigerant vapour is generated in the boiler of the generator, in which the refrigerant-rich solution is kept boiling by the heat supplied by a high-temperature source, e.g. a burner.

When the vapour pressure of the absorbent of the solution is relatively high, e.g. in the case of water-ammonia thermal machines, the generator also comprises a rectifier, which serves to reduce the concentration of absorber in the vapour flow produced by the boiler by mass exchange with the solution rich of refrigerant entering the generator and partial condensation of the vapour itself, and thus to increase the refrigerant content of the high-pressure vapour exiting the generator itself.

To this end, the rectifier commonly comprises a stripping column or stripper or analyser, in which the refrigerant vapour is stripped from the refrigerant-rich solution by means of direct contact with the hot vapour flows produced by the boiler, as well as a dephlegmator or partial condenser that allows for a further increase in the purity of the refrigerant contained in the vapour flows produced.

In operation, the generator of an absorption thermal machine, in particular an absorption heat pump, must manage significant power variations in input to the burner, significant variations in the flow rate and level of the solution in the various sections, and significant variations of the temperature and internal pressure. All of this while ensuring complete protection from leakages to the outside, particularly when ammonia is used, with no maintenance over tens of thousands of hours of operation, and without adversely affecting the efficiency of the heat and mass exchanges in the various components.

Currently, known solutions allow for relatively satisfactory results, albeit at the cost of design complexity and/or of oversizing various components, which ultimately result in an increased footprint, and in particular an increased height of the generator, an increase in the amount of refrigerant contained in the heat pump, and in the end of the construction costs.

Such drawbacks are even more problematic when thermal machines are used in the residential sector, where reducing the footprint and industrialising the product are of fundamental importance.

Clearly, the components of the rectifier are important in terms of the construction and overall performance of the generator.

In particular, a typical solution for the stripper or analyser provides for the use of a plate column, as is typical in distillation processes, sometimes with the insertion of a filler, e.g. metal raschig rings or ceramic saddles.

This solution allows for fractionated distillation, the efficacy of which approaches that of continuous distillation as the number of plate, and thus the height and cost of the generator, increases.

There are known solutions that include the use of structured materials of various designs, frequently combined with liquid distributors, which allow for continuous distillation, but not for a reduction in the costs of the stripper.

Ad hoc solutions, such as the use of a triple coil described in patent US 4,106,309 A, or plate columns that include the circuit of the refrigerant-depleted solution in the plates themselves, result in an increase of the internal heat recovery, but increase the complexity and costs of the stripping column.

In its turn, the dephlegmator, which is commonly arranged above the analyser, uses a coolant to which the vapour flows passing through it yield the condensation heat.

Depending on the fluid used, this heat may be variously reintroduced into the thermodynamic cycle; currently, three fluids are usually used: air, water, or the same solution rich of refrigerant is used to generate the refrigerant vapour, typically a solution of water and ammonia directed at the inlet of the generator.

In the case of air-condensed chillers, the partial transfer of the condensation heat to the air flow does not allow for recovery of any kind.

In the case of heat pumps intended to produce hot air, the exchange with the air flow does lead to a certain amount of recovery, but the coefficient of performance (COP) relative to the amount of heat introduced into the generator does not exceed 100 %, i.e. the heat consumed in the boiler to produce the vapour is directly transferred to the end user without any useful heat pumping function.

In the case of heat pumps for hot water production, the same degree of recovery is obtained as in the foregoing case if the partial condensation heat is transferred to the water flow; for machines of this type, any heat transfer to an air flow would result in zero recovery.

In the absorption heat pumps currently on the market, the most common practice is to cool the vapour flow in the dephlegmator by means of the refrigerant-rich solution pumped in the generator. The energy recovery in this case is greater than the aforementioned cases, because the enthalpy of the condensation of the vapour becomes the enthalpy of the rich solution that must be brought to a boil in the generator, and thus it does not affect the overall COP of the thermal machine.

In any case, the common decision to cool the dephlegmator with the rich solution flow from the pump is subject to a number of problems.

For example, the thermal power of absorption machines results from evaporation, condensation, and absorption processes characterised by very high specific enthalpies; thus, the flow rate of the rich solution, which is a vector of the refrigerant, is small, on the order of a few kg/h per kW of thermal power in the case of heat pumps. The small flow rate implies a low thermal capacity; the solution heats up rapidly in the dephlegmator, and the mean difference in temperature between the flows, which is the motor of the heat exchange, is reduced. The low flow rate also results in very low heat exchange coefficients between the solution and the surfaces of the dephlegmator. Both of the aforementioned effects of the low flow rate of the solution make it necessary to increase the length of the circuits in order to increase the heat exchange surface area and obtain adequate rectification, which results in increased footprint and costs.

Another possible way of obviating low heat exchange coefficients is to reduce the flow passage section of the rich solution in order to increase its speed and turbulence.

In any case, both solutions result in an increased pressure loss, which is particularly critical where, as is common with small machines, the pump of the solution is an alternative volumetric pump, for example a membrane-based pump.

Indeed, greater pressure drops in the dephlegmator may increase the intensity of harmful pressure spikes that occur at every stroke of the pump, thus shortening the useful life of the pump itself, or necessitating the use of a damping system.

Moreover, heating the rich solution in the dephlegmator results in reduced cooling capacity of the depleted solution in the so-called solution-cooled absorbers (SCA) in the case of machines based on GAX (generator-absorber heat exchange) or SHX (in the case of single-effect cycles) cycles, thus significantly reducing the benefit of the internal recovery obtained.

Another consequence of using the rich solution as a coolant in the dephlegmator is an increased complexity of any regulation of the capacity of the dephlegmator itself, i.e. the purity of the vapour produced, which ultimately influences the maximum pressure value of the thermodynamic cycle.

Additionally, in order to maximize the energy efficiency of the dephlegmator, its structure must ensure that the reflux of the condensate, which is very rich in refrigerant, comes into full contact with the vapour flow arising within the dephlegmator itself, resulting in the so-called 'self-analysis effect'.

In order to ameliorate this effect, in some solutions the dephlegmator is realized as a vertical component inside the head of the generator, thus increasing its height and thus the overall dimensions of the machine, in particular if the exchange surfaces are important due to the limited turbulence of the rich solution and/or to the limited mean temperature difference between the vapour flow to be condensed and the rich solution.

To avoid this drawback, in the prior art the dephlegmator is commonly a separate component from the generator, extending horizontally or inclined and has a siphon through which the condensation flows back into the generator.

This solution allows for greater flexibility in terms of the shape and compactness of the machine, but the aforementioned self-analysis effect within the dephlegmator is substantially limited given that the condensation accumulates at the base and only partially comes into contact with the vapour flow.

Lastly, another deficiency of known dephlegmators is that of vapour bypass, i.e. a certain amount of vapour does not come into contact with the cold surfaces of the dephlegmator, i.e. the surfaces that transfer heat to the coolant, and thus does not undergo the intended partial condensation.

This phenomenon becomes more acute in the case of dephlegmators of reduced size, in which the surface area on which the heat exchange with the coolant occurs is reduced.

The relevant prior art documents are US4573330A, WO99/64147A2 and CN2485604Y.

The main scope of the present invention is to provide a rectifier for a generator of refrigerant vapour for absorption thermal machines that is capable of at least partially mitigating one or more of the aforementioned drawbacks.

In particular, within this scope, one object of the present invention is to provide a rectifier for a generator of refrigerant vapour for absorption thermal machines that allows obtaining vapour flows having an adequate degree of refrigerant purity, according to a structure that is compact, functionally efficient, and can be realized at relatively low cost.

Another object of the present invention is that of providing a rectifier allowing for adequate exploitation of the auto-analysis effect and minimising, if not completely avoiding, any bypass by the vapour flows passing through it.

A further object of the present invention is to provide a rectifier allowing for optimal control of the purity of the refrigerant over the entire broad operating range of the heat pump, with the possibility of limiting purity in favour of reduced maximum pressure in the case of hot water production.

The present invention is disclosed in the independent claim 1. Further embodiments are disclosed in the dependent claims.

Other characteristics and advantages of the invention will become apparent from the following detailed description, which is provided by way of non-limiting example, by reference to the attached drawings, in which:
Fig. 1 shows one possible embodiment of a plurality of tubes of a dephlegmator that may be used in the rectifier according to the invention;
Fig. 2 shows a plurality of stacked plates according to one possible embodiment of a dephlegmator that may be used in the rectifier according to the invention;
Fig. 3 shows one possible embodiment of a perforated plate affixed to a vapour conveyor tube of a dephlegmator that may be used in the rectifier according to the invention;
Fig. 4 is a perspective view showing one of the plates of fig. 2;
Fig. 5 shows the components of fig. 1 - 3, as assembled;
Fig. 6 shows one possible embodiment of an open-cell ceramic foam body which is part of an analyser or stripper that may be used in the rectifier according to the invention;
Fig. 7 is a schematic cross-section view of a generator of refrigerant vapour for absorption thermal machines using a rectifier according to the invention;
Fig. 8 shows a possible variant of the generator of fig. 7;
Fig. 9 schematically illustrates a possible embodiment of a system for controlling the flow rate of the cooling water in the dephlegmator, allowing for regulation of the purity of the vapour exiting the dephlegmator itself.

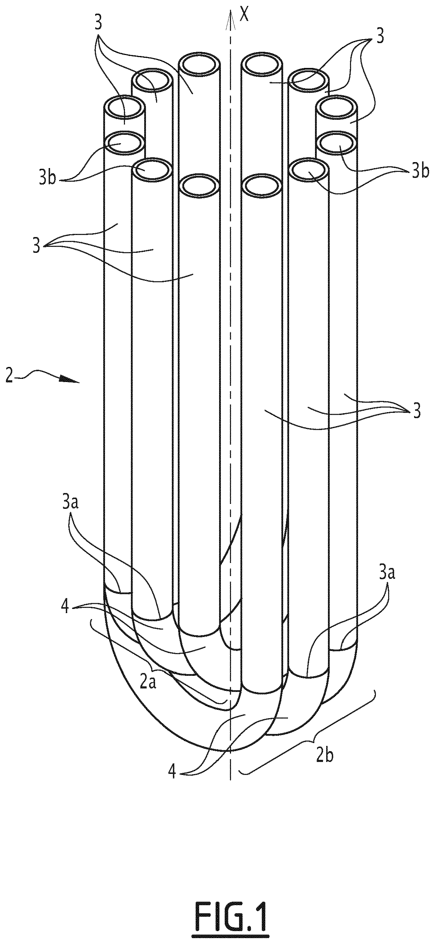

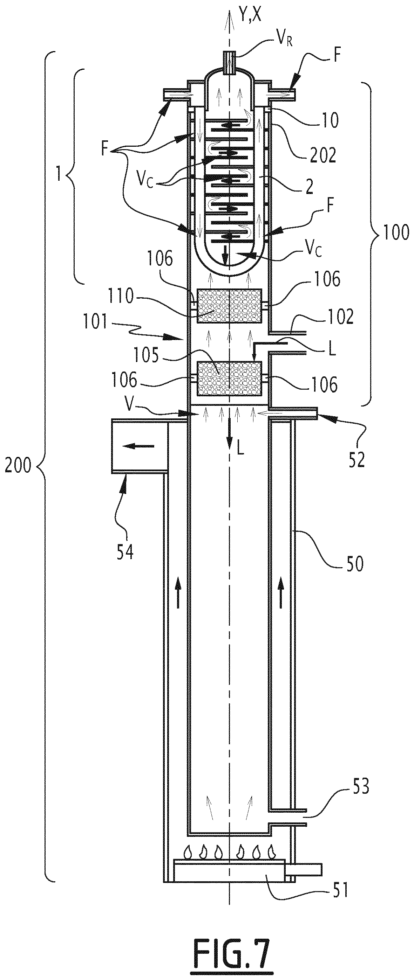

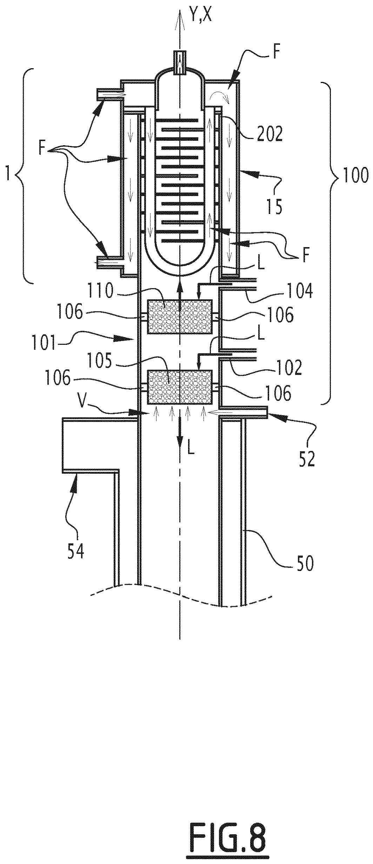

Figures 1-6 and 9 show embodiments being useful for understanding the invention, which are outside the subject-matter of the claims. Figures 7 and 8 show embodiments according to the present invention, which disclose a rectifier according to claim 1.

It should be noted that, in the following detailed description, components that are identical or similar from a structural and/or functional standpoint may have the same or different reference numbers, independently of whether they are shown in different embodiments of this invention or in different parts.

It should further be noted that, in order to provide a clear and concise description of this invention, the designs may not necessarily be to scale, and some characteristics of the description may be shown schematically.

Moreover, when the term "adapted " or "arranged or organized" or "configured" or "shaped" or a similar term is used in the present document, with reference to any component as a whole, or to any part of a component, or to a combination of components, it is to be understood that it refers to and correspondingly includes the structure and/ or configuration and/ or shape-form and/or positioning.

In addition, when the term "substantial" or "substantially" is used herein, it is to be understood as including an actual variation by plus or minus 5% relative to that which is indicated as a value, position, or axis of reference.

Furthermore, when the terms "transversal" or "transversally" are used herein they are to be understood as including a direction that is not parallel to the reference part or parts or direction(s)/ axis to which they refer; and perpendicularity is to be considered one specific case of transversal direction.

Fig. 7 and 8 are schematic representations of two possible exemplary embodiments of a vapour generator 200 in which a rectifier according to the invention (indicated as a whole by the reference number 100) may be used.

As a whole, the generator 200 extends vertically along a substantially vertical reference axis Y, and, at its bottom, there is provided a boiler, schematically represented by the reference numeral 50, which is suitable for boiling a liquid solution containing an absorbent substance and an absorbed refrigerant substance so as to generate vapour flows containing the refrigerant.

For example, a solution comprising water and ammonia, indicated by the arrows L, may be inserted into the boiler 50 via the conduit 52 and boiled by means of a burner 51, and then exit the boiler 50 via the conduit 53; the hot fumes generated by the burner 51, on the other hand, may exit via the conduit 54.

The boiler 50 may be of any embodiment and operating modality known in the prior art and/or can be easily realized by a person skilled in the art, and, in any case, are not relevant for the purposes of describing the rectifier 100 according to the invention; as such, they are not described in further detail herein.

The vapour flows rich of refrigerant generated, indicated by the arrows V in figures 7 and 8, rise towards the top of the generator 200 for appropriate modification by the rectifier (100) according to claim 1.

As will be described in greater detail hereinafter, the rectifier 100 according to the invention has a modular configuration in which more or fewer rectification stages are applied to the vapour flows V depending on the number of inlets, corresponding to different solution temperature levels, that are provided in the generator for the rich solution.

More specifically, as shown in the exemplary embodiments of figures 7 and 8, the rectifier 100 according to claim 1 comprises at least one casing 101 that extends along a substantially vertical reference axis X; when the rectifier is used in the generator 200, the vertical reference axis X preferably substantially coincides with the axis Y along which the generator 200 itself extends vertically.

According to the present invention and in the embodiment of fig. 7, at least one first transverse conduit 102 suited to allow the introduction of flows of the liquid solution L to be boiled in the subjacent boiler 50 is used in addition to the first conduit 52; according to the invention, the temperature of the liquid solution introduced via the conduit 102 is less than that of the solution introduced via the conduit 52.

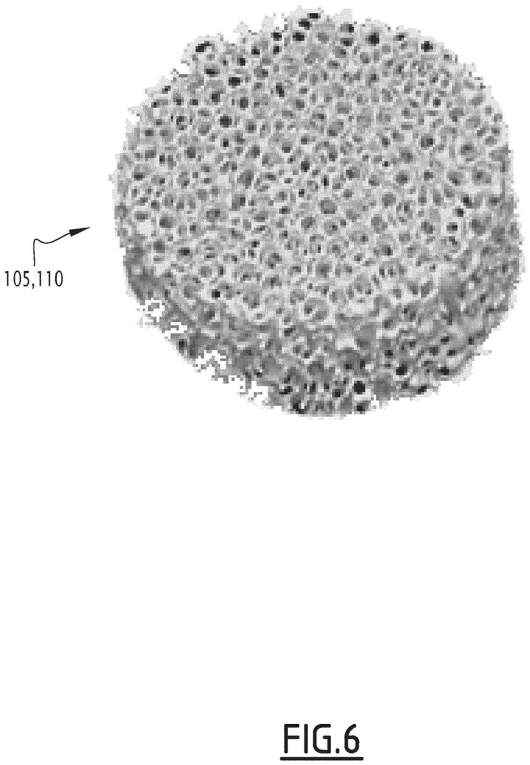

The rectifier 100 additionally comprises at least one first body, one exemplary embodiment of which is shown in fig. 6 and indicated therein by the reference numeral 105, which consists of an open-cell ceramic foam, which is contained in the casing 101 below the conduit 102.

The first body 105 is arranged along the casing 101 so as to be traversed in one direction by flows of the liquid solution L to be boiled, introduced via the conduit 102, which descend due to gravity towards the boiler 50 and wet the surfaces of the first body 105 itself, and in particular those of its open cells.

In the opposite direction, the first body 105 is traversed by flows of vapour V generated by boiling, which rise up from the boiler 50 as a countercurrent to the solution L and exchange heat with the solution itself that is wetting the surfaces of the first body 105, causing simultaneous evaporation of refrigerant from the solution L and condensation of at least some of the absorbent substance contained in the rising vapour flows V.

In one possible embodiment, as shown in the exemplary embodiments of fig. 7 and 8, the rectifier 100 according to the invention advantageously comprises at least one second body, also consisting of an open-cell ceramic foam, that is substantially equivalent to the first body 105 and is indicated in fig. 6 - 8 by the reference numeral 110.

The second body 110 is contained in the casing 101, above and spaced apart from the first body 105, and is advantageously contained within the casing above the conduit 102, which opens into the area between the two bodies 105 and 110 themselves.

When the rectifier 100 also uses a dephlegmator 1 contained in the upper part of the casing 101, the second body 110 may be contained in the casing above the conduit 102; in the embodiment of fig. 7, no other inlets are provided for the flows of the rich solution L above the conduit 102 itself.

In this case, as will result more clearly from the following description, the second body 110 is traversed from top to bottom only by the backflow of condensate, indicated by the arrows Vc, produced by the heat exchange between the rising vapours V and a coolant, indicated by the arrows F, used in the dephlegmator. This condensate backflow wets the surfaces of the open cells of the body 110; in this way, the rising vapour flows traverse the second body 110 as a countercurrent to the condensate backflow and exchanges heat with the backflow itself and the surfaces wet by it, generating new flows of vapour that contain refrigerant. In another possible embodiment, shown for example in fig. 8, the rectifier 100 according to the invention comprises another transverse conduit 104, below which the second body 110 is positioned; in this case, the conduit 104 constitutes another inlet for the flow of rich solution L at a lower temperature than that of the flow entering via the second conduit 102.

In this configuration, then, the second body 110 is also traversed by flows of the liquid solution L to be boiled, which are introduced via the conduit 104, and descend due to gravity towards the boiler 50, wetting the surfaces of the second body 110 itself, and in particular those of its open cells.

In the opposite direction, analogous to the embodiment of fig. 7, the second body 110 is traversed by vapour flows V generated by boiling, which rise from the boiler 50 to first traverse the first body 105 and the second body 110 itself, and then exchange heat with the solution itself that wets the surfaces of the second body 110, causing simultaneous evaporation of refrigerant from the solution L introduced via the third conduit 104 and condensation of at least some more of the absorbent substance contained in the rising vapour flows V. Preferably, the first body 105 and the second body 110 have a shape geometrically conjugated with the inner surface of the casing 101 and are connected in a fluid-tight fashion along the inner walls of the casing itself 101, for example by means of PTFE rings or tapes, indicated schematically in fig. 7 and 8 by reference numeral 106, which are arranged at least along the edges of the bodies 105 and 110 and the adjacent surfaces of the inner walls of the casing 101.

The casing 101 has a substantially cylindrical configuration extending along the substantially vertical reference axis X, and the first body 105 and second body 110 each are cylindrical in form with a diameter substantially equal or slightly smaller than the internal diameter of the casing 101, within the tolerance strictly required to ensure their insertion and for the insertion of the sealing elements 106.

Usefully, in one possible embodiment, the first and second bodies 105, 110 are for example made of aluminium oxide-based open cell ceramic foam, which combines extremely low cost with increased chemical inertness, resistance to high temperatures, and good wettability.

Conveniently, according to the exemplary embodiments shown in fig. 7 and 8, as previously described, the rectifier 100 according to the invention further comprises a dephlegmator (indicated as a whole by reference numeral 1), which is suitable to carry out a further condensation of the absorbent remaining in the vapours rectified via the first body 105 and, if applicable, the second body 110, so as to obtain even higher purity of the refrigerant contained in the rectified vapours.

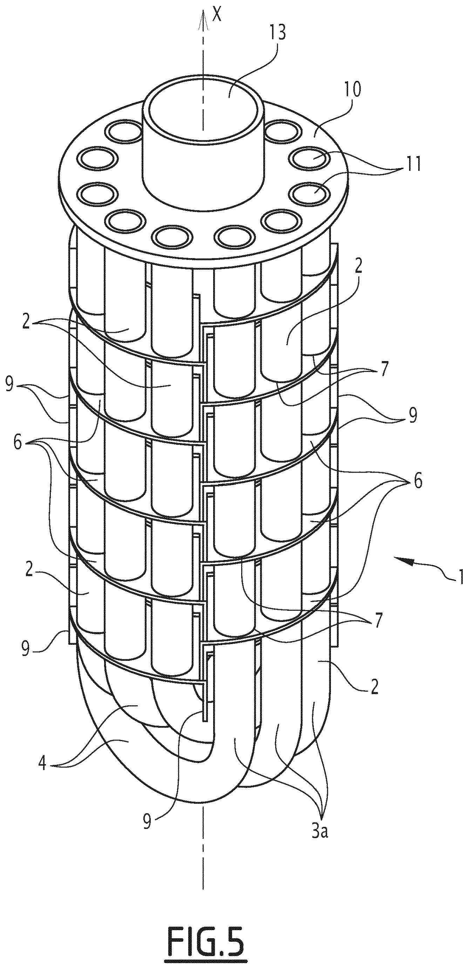

More specifically, as shown in fig. 5, the dephlegmator 1 comprises at least a plurality of tubes 2 for circulating the coolant fluid F, which is suitable for cooling the vapour flows V rising through the dephlegmator 1 by heat exchange.

In particular, each tube 2 comprises at least one rectilinear portion 3 extending longitudinally in a direction substantially parallel to the reference axis X.

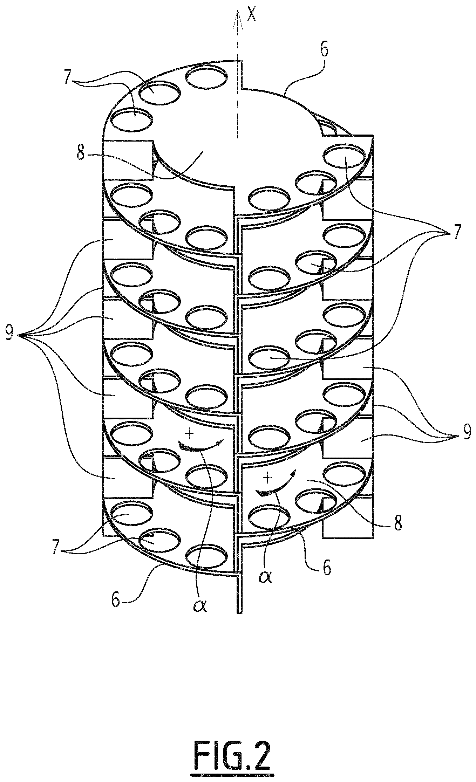

Furthermore, the dephlegmator 1 comprises at least a plurality of plates 6, which, as shown for example in figures 2 and 5, are stacked up in sequence one on top of the other along the reference axis X.

In particular, each plate 6 comprises a plurality of through holes 7 that are each traversed by a corresponding rectilinear portion 3 of a tube 2 of the plurality of tubes, and the plates 6 are suitably configured and mutually arranged so as to convey at least part of the vapour flows V traversing the dephlegmator 1 along the outer walls of the longitudinal portions 3 of one or more tubes 2 of the plurality of tubes 2.

Usefully, in one possible embodiment, schematically shown in fig. 2 for only two consecutive plates 6 for the sake of simplicity, each plate 6 is rotated of a predefined angle α relative to the immediately subjacent plate 6 in a transversal plane, in particular perpendicular, to the reference axis X.

In one possible embodiment, the angle of rotation α is between 85° and 95°, preferably substantially equal to 90°.

Clearly, this angle of rotation α may be taken to be in the clockwise or anticlockwise direction; for example starting from the bottom in fig. 2, the second plate 6 is rotated 90° clockwise/anticlockwise relative to the first plate 6, whilst the third plate 6 is rotated 90° clockwise/anticlockwise relative to the second plate 6, etc.

Advantageously, in one possible embodiment of the dephlegmator 1, and as shown in fig. 2, the plates 6 are substantially identical.

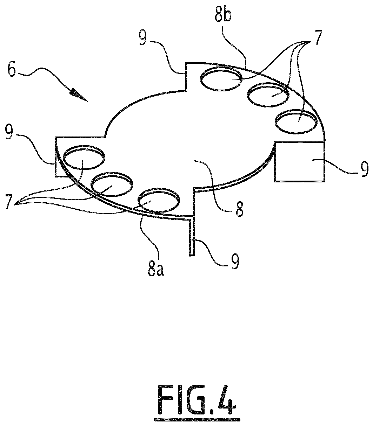

An example of a plate 6 is shown in figure 4, and comprises a substantially flat base 8 extending in a transversal plane, in particular substantially perpendicular to the reference axis X, and has, for instance, a substantially circular planform, on which the plurality of through holes 7 is formed; additionally, each plate 6 has one or more side walls 9 extending transversely from the base 8 in a direction substantially parallel to the reference axis X.

More specifically, in the embodiment shown, the plurality of through holes 7 comprises a first series of through holes 7 adjacent to one another and arranged at a first edge 8a of the base 8 and a second series of through holes 7 adjacent to one another and arranged at a second edge 8b of the base 8 that is opposite the first edge 8a relative to the reference axis X.

In turn, the one or more side walls 9 comprise, for example, a first and a second side walls 9 extending transversely from the base 8 in a direction substantially parallel to the reference axis X with the first series of through holes 7 arranged between them, and a third and fourth side walls 9 extending transversely from the base 8 in a direction substantially parallel to the reference axis X with the second series of through holes 7 arranged between them.

In one solution that is quite simple and economical from a design standpoint, each plate 6 is made from a steel sheet that is perforated and then appropriately cut along the two opposite unperforated edges, with the side walls 9 being obtained by bending.

Alternatively, the plates 6 may be made of any other suitable material, e.g. of technopolymers that are resistant to the operating temperatures of the dephlegmator.

In the embodiment shown, the plates 6 are stacked with the walls 9 acting as spacers between the plates and as supports on the base 8 of the immediately subjacent plate 6.

As can be seen in fig. 1, in one possible embodiment of the dephlegmator 1, each tube 2 comprises a substantially U- or C-shaped body having a first and a second rectilinear portions 3 extending longitudinally along said direction substantially parallel to the reference axis X, and a central portion 4 which connects the respective first and second rectilinear portions 3 at their first end 3a.

Preferably, as shown in fig. 1 and 5, the plurality of U- or C-shaped tubes 2 comprises a first series of tubes 2a that are arranged side by side to each other, and a second series of tubes 2b that are arranged side by side with the respective first and second rectilinear portions 3 substantially parallel to one another; the tubes 2a of the first series of tubes 2 are inserted transversely within the concavity defined by the U- or C-shaped bodies of the tubes 2 of the second series of tubes 2b, with their curved parts arranged above the corresponding curved parts of the tubes of the second series 2b.

In practice, in this embodiment, the tubes of the two series 2a and 2b are arranged substantially perpendicularly to one another, with the former (tubes 2a) partially inserted into the space defined by the latter (tubes 2b), thus providing a solution that is compact in design and extends vertically.

Clearly, in the dephlegmator 1 it is possible to use more than two series of tubes 2, e.g. three series of tubes arranged at 60° to one another; accordingly, the plates 6 may be provided with three series of through holes, and may be arranged rotated at 60° to one another.

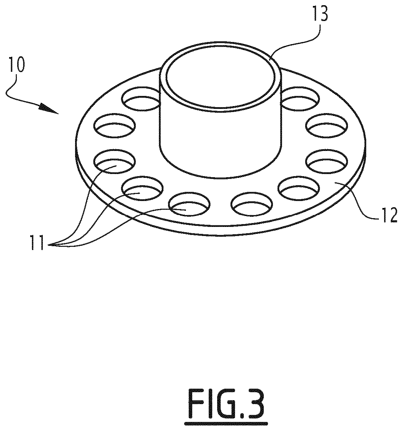

In one possible embodiment, the dephlegmator 1 further comprises a plate 10, shown in detail in fig. 3, e.g. made of steel.

The plate 10, which extends, for example substantially planarly in a tranversal, in particular perpendicular, plane relative to the reference axis X, and has a substantially circular planform with the axis X passing through the centre, has a plurality of through holes 11 arranged sequentially at a peripheral edge 12 of the plate 10 itself.

Furthermore, the dephlegmator 1 may comprise a bottom cover or conveyor tube 13, shown in fig. 3, which is affixed, e.g. welded, to the plate 10 in a substantially central position, and is suited to be connected to a condenser external to the generator 200, towards which the rectified vapour flows V_{R} that have passed through the dephlegmator 1 and have been cooled by it and at least partially purified by the absorbent substance are to be conveyed.

In practice, the plates 6 are stacked with the vertical walls 9 of each plate supported on the base 8 of the subjacent plate 6; the fact that each plate 6 is rotated relative to the subjacent plate 6 at the angle of rotation α, e.g. 90°, makes it possible to have an alternating sequence of plates and, ultimately, to obtain four mutually aligned series of through holes 7, of which two series of through holes 7 are those of the plates 6 arranged in the stack in even-numbered positions, and the other two series of through holes 7 consist of the holes of the plates 6 arranged in the stack in odd-numbered positions.

The tubes 2 are simply inserted into the respective holes 7 of the plates 6.

In particular, each tube 2 of the first series of tubes 2a is coupled with the stack of plates 6 by inserting the respective rectilinear portions 3, each into a corresponding series of vertically aligned holes 7, more specifically in those of the plates 6 in the odd-numbered positions in the stack; in turn, the tubes of the second series of tubes 2b are coupled with the stack of plates 6 by inserting the respective rectilinear portions 3, each into a corresponding series of vertically aligned holes 7, more specifically in those of the plates 6 in the even-numbered positions in the stack.

Thus, the plates 6 can be assembled together and with the tubes 2, without any need to weld the parts together.

Moreover, the plate 10 is connected to the tubes 2; in particular, the plate 10 is welded to each tube 2 at the second free end 3b of its first and second rectilinear portions.

Lastly, the conveyor tube 13 is affixed to the plate 10.

In particular, the two free end portions 3b of each tube 2 are affixed to the plate 10 at two associated peripheral holes 11; thus, each tube 2 is associated with two respective peripheral holes 11 suitable for one to allow the coolant fluid F to enter each tube 2 and the other to flow out of it, respectively.

The assembly thus obtained may be inserted into the casing 101, for example by positioning the perforated plate 10, pre-welded to the tubes 2, abutting the upper surface of the casing 101, and then affixing it in a suitable fashion, e.g. by welding.

The rectifier 100 thus obtained may be marketed separately or installed directly in a generator 200, for example by connecting its casing 101 to the subjacent part containing the boiler 50.

In practice, when the rectifier 100 is installed in the generator 200, during operation, and referring for instance to fig. 7, the vapour generated by the boiler 50 by boiling the initial solution, indicated by the arrows V, rises through the stripper or analyser, passing through the first body 105 and, if applicable, the second body 110. As a countercurrent, the solution L inserted through the conduit 102 flows downward, wetting the surface of the ceramic foam and coming into contact with the rising vapour V, so as to maximise the exchange surface and obtain continuous distillation.

The vapours thus initially rectified rise to reach the dephlegmator 1 if used. Here, the flow of coolant fluid F, for example the water to be heated by the heat pump in which the dephlegmator is installed, enters the tubes 2 of the dephlegmator 1 via the upper plate 10, and first flows as a countercurrent to, and then in co-current together with, the rising vapour V flow.

This atypical configuration has a very slight adverse effect on the efficiency of the dephlegmator 1, because the flow rate of the fluid F flow, and in particular of water, is elevated compared to the power exchanged in the dephlegmator 1, and its temperature variation whilst passing through the dephlegmator 1 is insignificant compared to the mean temperature difference between the coolant fluid and the vapour V flow.

As described above, thanks to their configuration and mutual arrangement, the plates 6 convey the vapour V along the outer surface of the tubes 2, and, in particular, along the respective rectilinear portions 3, where, due to the heat exchange with the coolant fluid F, the vapour V is further cooled, resulting in an additional condensation of the absorbent, e.g. water, contained in the vapour flows V.

Thus, the purity of the refrigerant contained in the rectified vapour flows (arrow V_{R}) that have passed through the dephlegmator 1 and leave the generator 200 via the conveyor tube 13 is advantageously increased.

Furthermore, during the passage of the vapour flows V, the plates 6 cause them restirring continuously to minimize any bypass, thus preventing, or at least minimising, the possibility that some of the vapour V bypasses the dephlegmator 1 without getting into contact with the tubes 2 and without transferring heat to the coolant fluid F.

The reflux of condensed vapour, indicated in fig. 7 by arrow V_{c}, generated along the tubes of the dephlegmator 1 flows downward, from one plate 6 to the next, and, as it flows, it comes into contact in contraflow direction with new rising flows of vapour V, thus maximising the auto-analysis effect, before flowing onto the stripper and undergoing further stripping.

In particular, this condensate reflux wets, or contributes to the wetting of, the surface of the ceramic foam of the second body 110, and thereafter of the first body 105, thus increasing the efficacy of the heat exchange carried out therein.

In one possible embodiment, schematically represented in fig. 8, the rectifier 100 further comprises a jacket 15 arranged on the outside of the plurality of tubes 2 and is in fluid communication with the inlets and outlets 3b of the tubes 2 themselves.

This jacket 15 is suited to circulate inside it flows of coolant fluid F, e.g. water, exiting the tubes 2.

This configuration allows increasing the heat exchange surface area between water and vapour, thus allowing for further reductions in the height of the dephlegmator 1, and thus of the generator 200 as a whole, with equal performance.

In the embodiment shown in fig. 8, the outer jacket 15 is shown installed on the outside of at least the casing 101 that accommodates the other components of the dephlegmator 1, thus cooling its walls after flowing in the tubes 2.

Usefully, in one possible embodiment, in particular when the coolant fluid F circulating in the tubes 2 is water, the rectifier 100 according to the invention advantageously also comprises control means suitable for regulating the flow rate of the water introduced into the plurality of tubes 2.

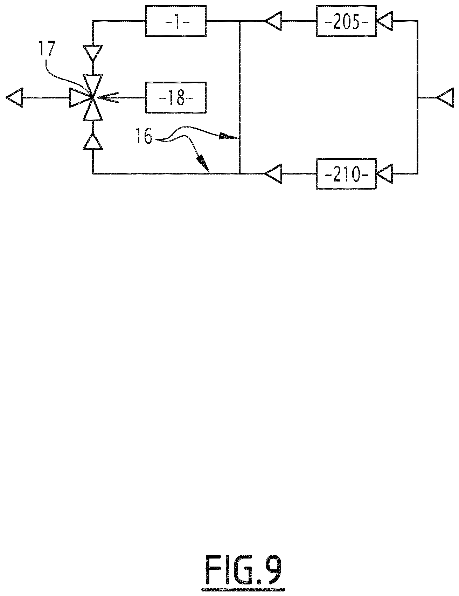

In this embodiment, as represented schematically in fig. 9, a bypass branch 16 is arranged parallel to the dephlegmator 1, because the full flow rate of water must be ensured, and the flow of water is divided between the condenser 205 and the absorber 210 of the absorption machine in which the generator 200 is used so as to minimise pressure losses.

In this possible embodiment, the control means comprises for example a proportional mixing valve 17 installed downstream of the tubes 2 of the dephlegmator 1, and is actuated under the control of a suitable control unit 18.

The actuation of the mixing valve 17 allows modifying, in a regulated way, the total flow rate of the water flowing through the dephlegmator 1; thus, the capacity of the dephlegmator 1 is controlled, and, in particular, the rectification process is regulated, thus ultimately varying the purity of the refrigerant vapour, and, with it, the pressure in the condenser.

For example, to reduce the capacity of the dephlegmator 1, the flow rate of the water flowing within it is reduced, thus reducing both the mean temperature difference between the water and the vapour V and the heat exchange coefficient between the water and the tubes 2.

Thus, a refrigerant vapour is obtained that is less pure and condenses at lower pressures. This entails a reduction in the performance of the evaporator, but in the case of producing high-temperature hot water, e.g. for the production of sanitary hot water (SHW), this reduction in the maximum operating pressure of the heat pump results in significant benefits design, cost, and useful life, in particular in the case of water-ammonia heat pumps, where the production of hot water at 70°C may result in pressures above 30 absolute bar in the condenser.

It should be noted that this regulation is carried out so as to ensure a minimum flow rate in any case, in order to avoid the water boiling in the dephlegmator, with the resultant adverse fluid-dynamic effects (cavitation) in the water circuit.

In practice, it has been found that the rectifier 100 according to the invention achieves the indicated scope and objectives since it allows obtaining, in a highly efficient way, rectified vapour with an adequate refrigerant purity and according to a compact, highly efficient structure that can be realized at relatively low cost.

By realizing a rectifier according to claim 1 with one or more open-cell ceramic foam bodies, it is possible to obtain an effect practically analogous to that of continuous distillation with a solution that is simple in terms of design and at low cost, whilst such results are obtained in the prior art using more metal plates with designs and configurations that are more complex and expensive. Moreover, the use of ceramic foams, in particular aluminium oxide ceramic foams, allows having open-cell bodies with good wettability that ensure an ample exchange surface between the liquid and the vapour and can be made easily in shapes and sizes suited to the specific casing 101 and/or generator 200. Additionally, the use of aluminium oxide open cell ceramic foam allows for bodies that are completely inert for example to water and ammonia, which are resistant to much higher temperatures (>1000°C) than the operating temperatures of a conventional generator.

By using the dephlegmator, it is possible to obtain rectified vapour flows with even higher refrigerant purity with a structure that is also compact and easy to build.

Moreover, thanks to the invention, it is also possible to actively control the operating pressure, for instance to produce hot water at high temperature.

As above indicated, the rectifier 100 according to the invention may be made with more rectification stages or phases depending on the applications and the number of inlets for liquid solution at various temperature levels, and, in particular, on the desired degree of purity, and it may be advantageously used in generators of refrigerant vapour for absorption thermal machines.

Thus, another object of this invention is a generator 200 of vapour containing a refrigerant for absorption thermal machines, which includes a boiler 50 arranged at the base of the generator 200 and suitable for boiling a liquid solution L comprising at least one absorbent substance and one refrigerant substance absorbed so as to generate vapour flows V containing said absorbed refrigerant substance and possibly a percentage of absorbent substance. Such a generator 200 is characterised by the fact that it further comprises at least one rectifier 100 according to claim 1, which is arranged above said boiler 50 and is adapted to be crossed by and modify, in particular increase, the percentage of the refrigerant substance present in the vapour flows V generated by boiling.

Furthermore, the present invention also includes an absorption thermal machines, e.g. a heat pump or chiller, wherein it comprises such a generator 200 and at least one rectifier 100 according to one or more of the appended claims.

Of course, without prejudice to the principle of the invention, the embodiments and specific implementations may be widely varied with respect to what previously described and illustrated as non-limiting examples without departing from the scope of the present invention as defined in the appended claims; for example, it is possible to use one or more additional open-cell ceramic foam bodies installed within the casing 101 in addition to the two aforementioned bodies 105, 100, and arranged in series. In this case, it is possible to use more inlet conduits for the solution L installed along the casing 101, with each of them being located between two adjacent bodies. In this case, it is possible to introduce a liquid solution L at a temperature below that of the solution in the conduit 52 into each of the conduits, and the temperatures of the flows of solution L through the conduits may be different to each other. The components described may be made of a material other than that set forth or indicated as preferred in the description, and/or they may be configured differently to the configuration described, provided that they are compatible with use within the scope of the claims, e.g., the housing 101 may be made of several separate parts that are assembled together, e.g. a first part to hold only the open cell ceramic foam body(ies) constituting the stripper/analyser, and a second part to hold the components of the dephlegmator 1, when used; the solution employed may consist of components other than water and ammonia; the second body 110 may be made of different ceramic materials, e.g. using silicon carbide; depending on the thermodynamic cycle carried out by the thermal machine, a different number of inlet conduits for the liquid solution L for boiling may be used, etc.

## Claims

1. Rectifier (100) for a refrigerant vapor generator (200), said rectifier being adapted to modify the percentage of a refrigerant substance present in vapor flows (V) generated by boiling a liquid solution (L) comprising at least one absorbent substance and said refrigerant substance absorbed and wherein it comprises at least:
- a casing (101) which develops along a substantially vertical reference axis (X) and includes at least a first transverse duct (102) designed to allow the introduction of flows of said liquid solution (L) to be boiled;
- at least a first body (105) which is housed in said casing (101) below said first duct (102) so as to be crossed by flows of the liquid solution (L) to be boiled which, going downwards, wet its surfaces, and by vapor flows (V) generated by boiling which, going upwards, exchange heat with the solution itself which wets the surfaces of the first body (105), causing at the same time evaporation of refrigerant from the liquid solution (L) and the condensation of at least a part of the absorbent substance contained in said vapor streams (V) going upwards, **characterized in that** the first body (105) consists of an open cell ceramic foam.

2. Rectifier (100) according to claim 1, further comprising a second body (110) consisting of an open cell ceramic foam, which is housed in said casing (101) spaced apart from said first body (105) and arranged above the first duct (102).

3. Rectifier (100) according to claim 2, further comprising a further duct (104) which is arranged above said second body (110) and is adapted to allow the introduction of further flows of said liquid solution (L) to be boiled having a temperature lower than the flows of liquid solution (L) to be boiled entering from the first duct (102).

4. Rectifier (100) according to one or more of the preceding claims, in which said first body (105) and/or said second body (110) have a shape geometrically conjugated with the internal surface of the casing (101) and are connected in a fluid-tight manner along the inner walls of the casing itself (101).

5. Rectifier (100) according to claim 4, wherein said casing (101) has a substantially cylindrical configuration which extends along said substantially vertical reference axis (X), and in which said first and second bodies (105, 110) both have a cylindrical shape.

6. Rectifier (100) according to one or more of the preceding claims, further comprising a dephlegmator (1) housed in the casing (101) above said first and second bodies (105, 110), said dephlegmator (1) comprising at least:
- a plurality of tubes (2) each having at least one rectilinear portion (3) extending longitudinally along a direction substantially parallel to said substantially vertical reference axis (X) of the dephlegmator (1), said tubes (2) being devised for circulating inside them a cooling fluid (F) suitable for cooling vapor flows (V) which have passed through said first body (105) and/or second bodies (110);
- a plurality of plates (6) which are stacked up in sequence along said reference axis (X) and comprise each a plurality of through holes (7) which are each crossed by a corresponding rectilinear portion (3) of a tube ( 2), said plates (6) being further configured and mutually arranged between them so as to convey, at least said vapor flows (V) which have passed through said first body (105) and/or second bodies (110) along the external walls of the rectilinear portions (3) of one or more tubes (2) of said plurality of tubes, so that to exchange heat with said cooling fluid (F) and cause the condensation of at least a further portion of the absorbent substance contained in said vapor flows (V).

7. Rectifier (100) according to claim 6, wherein each plate (6) of said plurality of plates (6) is rotated with respect to the plate (6) immediately below it by a predefined angle (α) in a transverse plane with respect to said substantially vertical reference axis (X).

8. Rectifier (100) according to claim 7, wherein said angle (α) is substantially equal to 90°.

9. Rectifier (100) according to one or more of claims from 6 to 8, wherein said plates (6) are substantially identical to each other.

10. Rectifier (100) according to one or more of claims from 6 to 9, wherein said plates (6) comprise:
- a substantially flat base (8) on which there are provided at least a first series of through holes (7) adjacent to each other and arranged at a first edge (8a) of the base (8), and at least a second series of through holes (7) adjacent to each other and arranged at a second edge (8b) of the base (8) opposite the first edge (8a) with respect to said reference axis (X); and
- one or more side walls (9) which extend transversely from the base (8) in a direction substantially parallel to said axis reference (X).

11. Rectifier (100) according to one or more of claims from 6 to 10, wherein each tube (2) comprises a substantially U or C shaped body having a first and a second rectilinear portions (3) extending longitudinally along said direction substantially parallel to said reference axis (X), and a central portion (4) which connects said first and second rectilinear portions (3) at their first end (3a).

12. Rectifier (100) according to claim 11, wherein said plurality of U- or C-shaped tubes (2) comprises at least a first series of tubes (2a) which are arranged side by side with their respective first and second rectilinear portions ( 3) substantially parallel to each other, and at least a second series of tubes (2b) which are arranged side by side with their respective first and second rectilinear portions (3) substantially parallel to each other, the tubes (2a) of the first series of tubes being arranged transversely with respect to the tubes (2b) of the second series of tubes.

13. Rectifier (100) according to claim 12, further comprising:
- a substantially planar plate (10) having a plurality of peripheral through holes (11) arranged in sequence at a peripheral edge (12) of the plate (10) itself, each tube (2) having the second free ends (3b) of its first and second rectilinear portions (3) fixed to the plate (10) at two peripheral holes (12) adapted to respectively allow entry into and exit from each tube (2) of said cooling fluid; and
- a conveyor tube (13) which is fixed, in a substantially central position, to the plate (10) and is suitable to be connected to a condenser towards which the vapor flows ( V) exiting from the rectifier (100) are conveyed.

14. Rectifier (100) according to one or more of the preceding claims, further comprising a jacket (15) which is arranged externally to the plurality of tubes (2) and is in fluid communication with said tubes (2) and is able to circulate to its internal flows of cooling fluid (F) exiting from said tubes (2).

15. Rectifier (100) according to one or more of the preceding claims, wherein said cooling fluid (F) is water and the rectifier (100) further comprises control means (17, 18) suitable for regulating the flow rate of water introduced into the plurality of tubes (2).

16. Vapor generator (200) containing a refrigerant for absorption thermal machines, comprising a boiler (50) arranged at the base of the generator (200) and suitable for boiling a liquid solution (L) comprising at least one absorbent substance and one refrigerant substance absorbed so as to generate vapor flows (V) containing said absorbed refrigerant substance and possibly a percentage of absorbent substance, the generator (200) being **characterized in that** it further comprises at least one rectifier (100) according to one or more of the preceding claims which is arranged above said boiler (50) and is adapted to be crossed by and modify the percentage of the refrigerant substance present in the vapor flows (V) generated by boiling.

## Patentansprüche

1. Gleichrichter (100) für einen Kältemitteldampferzeuger (200), wobei der Gleichrichter angepasst ist, um den Prozentsatz einer Kältemittelsubstanz zu modifizieren, die in Dampfströmen (V) vorhanden ist, die durch Sieden einer flüssigen Lösung (L) erzeugt werden, umfassend mindestens eine absorbierende Substanz und die absorbierte Kältemittelsubstanz, und wobei er mindestens Folgendes umfasst:
- ein Gehäuse (101), das sich entlang einer im Wesentlichen vertikalen Bezugsachse (X) erstreckt und mindestens einen ersten Querkanal (102) beinhaltet, der konstruiert ist, um die Einführung von Strömen der zu siedenden flüssigen Lösung (L) zu ermöglichen;
- mindestens einen ersten Körper (105), der in dem Gehäuse (101) unter dem ersten Kanal (102) untergebracht ist, um von Strömen der zu siedenden flüssigen Lösung (L), die nach unten fließen und seine Oberflächen benetzen, und von Dampfströmen (V), die durch das Kochen erzeugt werden und nach oben fließen, durch Wärmeaustausch mit der Lösung an sich, die die Oberflächen des ersten Körpers (105) benetzt, durchströmt zu werden, was gleichzeitig eine Verdampfung des Kältemittelss aus der flüssigen Lösung (L) und eine Kondensation von mindestens einem Teil der absorbierenden Substanz, die in den nach oben gerichteten Dampfströmen (V) enthalten ist, bewirkt, **dadurch gekennzeichnet, dass** der erste Körper (105) aus einem offenzelligen Keramikschaum besteht.

2. Gleichrichter (100) nach Anspruch 1, ferner umfassend einen zweiten Körper (110), der aus einem offenzelligen Keramikschaum besteht und in dem Gehäuse (101) untergebracht ist, das von dem ersten Körper (105) beabstandet ist und über dem ersten Kanal (102) angeordnet ist.

3. Gleichrichter (100) nach Anspruch 2, ferner umfassend einen weiteren Kanal (104), der über dem zweiten Körper (110) angeordnet und angepasst ist, um die Einleitung weiterer Ströme der zu siedenden flüssigen Lösung (L) mit einer niedrigeren Temperatur als die Ströme der zu siedenden flüssigen Lösung (L), die aus dem ersten Kanal (102) eintreten, zu ermöglichen.

4. Gleichrichter (100) nach einem oder mehreren der vorherigen Ansprüche, wobei der erste Körper (105) und/oder der zweite Körper (110) eine Form aufweisen, die geometrisch mit der Innenfläche des Gehäuses (101) konjugiert ist, und fluiddicht entlang der Innenwände des Gehäuses an sich (101) verbunden sind.

5. Gleichrichter (100) nach Anspruch 4, wobei das Gehäuse (101) eine im Wesentlichen zylindrische Konfiguration aufweist, die sich entlang der im Wesentlichen vertikalen Bezugsachse (X) erstreckt, und wobei der erste und der zweite Körper (105, 110) beide eine zylindrische Form aufweisen.

6. Gleichrichter (100) nach einem oder mehreren der vorherigen Ansprüche, ferner umfassend einen Dephlegmator (1), der in dem Gehäuse (101) über dem ersten und dem zweiten Körper (105, 110) untergebracht ist, der Dephlegmator (1) umfassend mindestens:
- eine Vielzahl von Rohren (2), die jeweils mindestens einen geradlinigen Abschnitt (3) aufweisen, der sich in Längsrichtung in einer Richtung erstreckt, die im Wesentlichen parallel zu der im Wesentlichen vertikalen Bezugsachse (X) des Dephlegmators (1) ist, wobei die Rohre (2) ausgelegt sind, dass in ihrem Inneren ein Kühlfluid (F) zirkuliert, das zum Kühlen von Dampfströmen (V) geeignet ist, die den ersten Körper (105) und/oder den zweiten Körper (110) durchlaufen haben;
- eine Vielzahl von Platten (6), die nacheinander entlang der Bezugsachse (X) gestapelt sind und jeweils eine Vielzahl von Durchgangslöchern (7) aufweisen, die jeweils von einem entsprechenden geradlinigen Abschnitt (3) eines Rohrs ( 2) gekreuzt werden, wobei die Platten (6) ferner konfiguriert und gegenseitig dazwischen angeordnet sind, um mindestens die Dampfströme (V), die den ersten Körper (105) und/oder die zweiten Körper (110) durchlaufen haben, entlang der Außenwände der geradlinigen Abschnitte (3) eines oder mehrerer Rohre (2) der Vielzahl von Rohren zu befördern, um Wärme mit dem Kühlfluid (F) auszutauschen und die Kondensation zumindest eines weiteren Teils der in den Dampfströmen (V) enthaltenen absorbierenden Substanz zu bewirken.

7. Gleichrichter (100) nach Anspruch 6, wobei jede Platte (6) der Vielzahl von Platten (6) in Bezug auf die unmittelbar darunter liegende Platte (6) um einen vordefinierten Winkel (α) in einer Querebene in Bezug auf die im Wesentlichen vertikale Bezugsachse (X) gedreht ist.

8. Gleichrichter (100) nach Anspruch 7, wobei der Winkel (α) im Wesentlichen gleich 90° ist.

9. Gleichrichter (100) nach einem oder mehreren der Ansprüche 6 bis 8, wobei die Platten (6) im Wesentlichen identisch zueinander sind.

10. Gleichrichter (100) nach einem oder mehreren der Ansprüche 6 bis 9, wobei die Platten (6) Folgendes umfassen:
- eine im Wesentlichen flache Basis (8), auf der mindestens eine erste Reihe von Durchgangslöchern (7), die aneinander angrenzen und an einem ersten Rand (8a) der Basis (8) angeordnet sind, und mindestens eine zweite Reihe von Durchgangslöchern (7), die aneinander angrenzen und an einem zweiten Rand (8b) der Basis (8) gegenüber dem ersten Rand (8a) in Bezug auf die Bezugsachse (X) angeordnet sind, bereitgestellt ist; und
- eine oder mehrere Seitenwände (9), die sich quer von der Basis (8) in einer Richtung im Wesentlichen parallel zu der Bezugsachse (X) erstrecken.

11. Gleichrichter (100) nach einem oder mehreren der Ansprüche 6 bis 10, wobei jedes Rohr (2) einen im Wesentlichen U- oder C-förmigen Körper, der einen ersten und einem zweiten geradlinigen Abschnitt (3) aufweist, die sich in Längsrichtung entlang der Richtung im Wesentlichen parallel zu der Bezugsachse (X) erstrecken, und einen mittleren Abschnitt (4), der den ersten und den zweiten geradlinigen Abschnitt (3) an ihrem ersten Ende (3a) verbindet, umfasst.

12. Gleichrichter (100) nach Anspruch 11, wobei die Vielzahl von U- oder C-förmigen Rohren (2) mindestens eine erste Reihe von Rohren (2a), die Seite an Seite mit ihren jeweiligen ersten und zweiten geradlinigen Abschnitten (3) im Wesentlichen parallel zueinander angeordnet sind, und mindestens eine zweite Reihe von Rohren (2b), die Seite an Seite mit ihren jeweiligen ersten und zweiten geradlinigen Abschnitten ( 3) im Wesentlichen parallel zueinander angeordnet sind, umfasst, wobei die Rohre (2a) der ersten Reihe von Rohren quer zu den Rohren (2b) der zweiten Reihe von Rohren angeordnet sind.

13. Gleichrichter (100) nach Anspruch 12, ferner umfassend:
- eine im Wesentlichen ebene Platte (10), die eine Vielzahl von peripheren Durchgangslöchern (11) aufweist, die in Folge an einer peripheren Kante (12) der Platte (10) an sich angeordnet sind, wobei jedes Rohr (2) die zweiten freien Enden (3b) seiner ersten und zweiten geradlinigen Abschnitte (3) aufweist, die an der Platte (10) an zwei peripheren Löchern (12) befestigt sind, die angepasst sind, um jeweils einen Eintritt bzw. Austritt des Kühlfluids in jedes Rohr (2) zu ermöglichen.
- ein Förderrohr (13), das an einer im Wesentlichen mittleren Position an der Platte (10) befestigt ist und geeignet ist, um mit einem Kondensator verbunden zu werden, zu dem die Dampfströme (V), die aus dem Gleichrichter (100) austreten, gefördert werden.

14. Gleichrichter (100) nach einem oder mehreren der vorherigen Ansprüche, ferner umfassend einen Mantel (15) umfasst, der außerhalb der Vielzahl von Rohren (2) angeordnet ist und in Fluidverbindung mit den Rohren (2) ist und in der Lage ist, aus den Rohren (2) austretende Kühlfluidströme (F) zu seinem Inneren zu zirkulieren.

15. Gleichrichter (100) nach einem oder mehreren der vorherigen Ansprüche, wobei das Kühlfluid (F) Wasser ist und der Gleichrichter (100) ferner Steuereinrichtungen (17, 18) umfasst, die geeignet sind, um die Durchflussrate von Wasser, das in die Vielzahl von Rohren (2) eingeleitet wird, zu regulieren.

16. Dampferzeuger (200), der ein Kältemittel für Absorptionswärmemaschinen enthält, umfassend einen Kessel (50), der an der Basis des Generators (200) angeordnet und geeignet ist, um eine flüssige Lösung (L) zu sieden, die mindestens eine absorbierende Substanz und eine absorbierte kühlende Substanz umfasst, um Dampfströme (V) zu erzeugen, die die absorbierte kühlende Substanz und möglicherweise einen Prozentsatz der absorbierenden Substanz enthalten, wobei der Generator (200) **dadurch gekennzeichnet ist, dass** er ferner mindestens einen Gleichrichter (100) nach einem oder mehreren der vorhergehenden Ansprüche umfasst, der über dem Kessel (50) angeordnet und geeignet ist, um von dem Prozentsatz der in den durch Sieden erzeugten Dampfströmen (V) vorhandenen kühlenden Substanz durchquert zu werden und diesen zu verändern.

## Revendications

1. Redresseur (100) pour un générateur de vapeur de réfrigérant (200), ledit redresseur étant adapté pour modifier le pourcentage d'une substance réfrigérante présente dans les flux de vapeur (V) générés par l'ébullition d'une solution liquide (L) comprenant au moins une substance absorbante et ladite substance réfrigérante absorbée et dans lequel il comprend au moins :
- un boîtier (101) qui se développe le long d'un axe de référence (X) sensiblement vertical et comprend au moins un premier conduit transversal (102) destiné à permettre l'introduction de flux de ladite solution liquide (L) à bouillir ;
- au moins un premier corps (105) qui est logé dans ledit boîtier (101) sous ledit premier conduit (102) de manière à être traversé par des flux de la solution liquide (L) à bouillir qui, en descendant, mouillent ses surfaces, et par des flux de vapeur (V) générés par l'ébullition qui, en montant, échangent de la chaleur avec la solution elle-même qui mouille les surfaces du premier corps (105), provoquant en même temps l'évaporation du réfrigérant de la solution liquide (L) et la condensation d'au moins une partie de la substance absorbante contenue dans lesdits flux de vapeur (V) montant, **caractérisé par le fait que** le premier corps (105) est constitué d'une mousse céramique à cellules ouvertes.

2. Redresseur (100) selon la revendication 1, comprenant en outre un second corps (110) constitué d'une mousse céramique à cellules ouvertes, qui est logé dans ledit boîtier (101) à distance dudit premier corps (105) et disposé au-dessus du premier conduit (102).

3. Redresseur (100) selon la revendication 2, comprenant en outre un autre conduit (104) qui est disposé au-dessus dudit deuxième corps (110) et qui est adapté pour permettre l'introduction d'autres flux de ladite solution liquide (L) à bouillir présentant une température inférieure aux flux de solution liquide (L) à bouillir entrant par le premier conduit (102).

4. Redresseur (100) selon l'une ou plusieurs des revendications précédentes, dans lequel ledit premier corps (105) et/ou ledit second corps (110) présentent une forme géométriquement conjuguée à la surface interne du boîtier (101) et sont reliés de manière étanche aux fluides le long des parois internes du boîtier luimême (101).

5. Redresseur (100) selon la revendication 4, dans lequel ledit boîtier (101) présente une configuration sensiblement cylindrique qui s'étend le long dudit axe de référence sensiblement vertical (X), et dans lequel lesdits premier et second corps (105, 110) présentent tous deux une forme cylindrique.

6. Redresseur (100) selon l'une ou plusieurs des revendications précédentes, comprenant en outre un déflegmateur (1) logé dans le boîtier (101) au-dessus desdits premier et second corps (105, 110), ledit déflegmateur (1) comprenant au moins :
- une pluralité de tubes (2) présentant chacun au moins une partie rectiligne (3) s'étendant longitudinalement le long d'une direction sensiblement parallèle à l'axe de référence sensiblement vertical (X) du déflegmateur (1), lesdits tubes (2) étant conçus pour faire circuler à l'intérieur un fluide de refroidissement (F) apte à refroidir les flux de vapeur (V) qui ont traversé ledit premier corps (105) et/ou lesdits deuxièmes corps (110) ;
- une pluralité de plaques (6) qui sont empilées en séquence le long dudit axe de référence (X) et comprennent chacune une pluralité de trous traversants (7) qui sont chacun traversés par une partie rectiligne correspondante (3) d'un tube ( 2), lesdites plaques (6) étant en outre configurées et disposées mutuellement entre elles de manière à transporter au moins lesdits flux de vapeur (V) qui ont traversé ledit premier corps (105) et/ou lesdits seconds corps (110) le long des parois externes des parties rectilignes (3) d'un ou de plusieurs tubes (2) de ladite pluralité de tubes, de manière à échanger de la chaleur avec ledit fluide de refroidissement (F) et à provoquer la condensation d'au moins une autre partie de la substance absorbante contenue dans lesdits flux de vapeur (V).

7. Redresseur (100) selon la revendication 6, dans lequel chaque plaque (6) de ladite pluralité de plaques (6) est tournée par rapport à la plaque (6) immédiatement inférieure d'un angle prédéfini (α) dans un plan transversal par rapport audit axe de référence sensiblement vertical (X).

8. Redresseur (100) selon la revendication 7, dans lequel ledit angle (α) est sensiblement égal à 90°.

9. Redresseur (100) selon l'une ou plusieurs des revendications 6 à 8, dans lequel les plaques (6) sont sensiblement identiques les unes aux autres.

10. Redresseur (100) selon une ou plusieurs des revendications 6 à 9, dans lequel lesdites plaques (6) comprennent :
- une base sensiblement plate (8) sur laquelle sont prévus au moins une première série de trous traversants (7) adjacents les uns aux autres et disposés sur un premier bord (8a) de la base (8), et au moins une deuxième série de trous traversants (7) adjacents les uns aux autres et disposés sur un deuxième bord (8b) de la base (8) opposé au premier bord (8a) par rapport à l'axe de référence (X) ; et
- une ou plusieurs parois latérales (9) qui s'étendent transversalement à partir de la base (8) dans une direction sensiblement parallèle à l'axe de référence (X).

11. Redresseur (100) selon une ou plusieurs des revendications 6 à 10, dans lequel chaque tube (2) comprend un corps en forme de U ou de C présentant une première et une deuxième parties rectilignes (3) s'étendant longitudinalement le long de ladite direction sensiblement parallèle à l'axe de référence (X), et une partie centrale (4) qui relie lesdites première et deuxième parties rectilignes (3) à leur première extrémité (3a).

12. Redresseur (100) selon la revendication 11, dans lequel ladite pluralité de tubes (2) en forme de U ou de C comprend au moins une première série de tubes (2a) qui sont disposés côte à côte avec leurs première et deuxième parties rectilignes respectives ( 3) sensiblement parallèles l'une à l'autre, et au moins une deuxième série de tubes (2b) disposés côte à côte avec leurs première et deuxième parties rectilignes (3) respectives sensiblement parallèles entre elles, les tubes (2a) de la première série de tubes étant disposés transversalement par rapport aux tubes (2b) de la deuxième série de tubes.

13. Redresseur (100) selon la revendication 12, comprenant en outre :
- une plaque sensiblement plane (10) comportant une pluralité de trous périphériques traversants (11) disposés en séquence sur un bord périphérique (12) de la plaque (10) elle-même, chaque tube (2) présentant les secondes extrémités libres (3b) de ses première et seconde parties rectilignes (3) fixées à la plaque (10) au niveau de deux trous périphériques (12) adaptés pour permettre respectivement l'entrée et la sortie dudit fluide de refroidissement dans chaque tube (2) ; et
- un tube transporteur (13) qui est fixé, dans une position sensiblement centrale, à la plaque (10) et qui est apte à être connecté à un condenseur vers lequel sont acheminés les flux de vapeur ( V) sortant du redresseur (100).

14. Redresseur (100) selon l'une ou plusieurs des revendications précédentes, comprenant en outre une enveloppe (15) disposée à l'extérieur de la pluralité de tubes (2), en communication fluidique avec lesdits tubes (2) et capable de faire circuler vers son intérieur des flux de fluide de refroidissement (F) sortant desdits tubes (2).

15. Redresseur (100) selon l'une ou plusieurs des revendications précédentes, dans lequel ledit fluide de refroidissement (F) est de l'eau et le redresseur (100) comprend en outre des moyens de commande (17, 18) aptes à réguler le débit d'eau introduit dans la pluralité de tubes (2).

16. Générateur de vapeur (200) contenant un réfrigérant pour machines thermiques d'absorption, comprenant une chaudière (50) disposée à la base du générateur (200) et apte à faire bouillir une solution liquide (L) comprenant au moins une substance absorbante et une substance frigorigène absorbée de façon à générer des flux de vapeur (V) contenant ladite substance frigorigène absorbée et éventuellement un pourcentage de substance absorbante, le générateur (200) étant **caractérisé en ce qu'**il comprend en outre au moins un redresseur (100) selon l'une ou plusieurs des revendications précédentes qui est disposé au-dessus de ladite chaudière (50) et est apte à être traversé par et à modifier le pourcentage de la substance réfrigérante présente dans les flux de vapeur (V) générés par l'ébullition.
